(19) Europäisches Patentamt
European Patent Office
Office européen des brevets

(11) **EP 1 912 368 B1**

(12) **EUROPEAN PATENT SPECIFICATION**

(45) Date of publication and mention
of the grant of the patent:
**15.12.2010 Bulletin 2010/50**

(51) Int Cl.:
***H04L 1/06*** *(2006.01)*

(21) Application number: **06301039.1**

(22) Date of filing: **11.10.2006**

(54) **Method of decoding of a received multidimensional signal and corresponding device**

Verfahren zur Dekodierung eines empfangenen multidimensionalen Signals und entsprechende Vorrichtung

Procédé de décodage d'un signal multidimensionnel reçu et dispositif correspondant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008 Bulletin 2008/16**

(73) Proprietor: **Thomson Licensing**
**92130 Issy-les-Moulineaux (FR)**

(72) Inventor: **Gueguen, Arnaud**
**92648 BOULOGNE CEDEX (FR)**

(74) Representative: **Le Dantec, Claude**
**Technicolor**
**1-5 rue Jeanne d'Arc**
**92130 Issy-les-Moulineaux (FR)**

(56) References cited:
**EP-A- 1 453 262    EP-A- 1 460 813**
**EP-A- 1 521 414**

- **CHAN A M ET AL: "A new reduced-complexity sphere decoder for multiple antenna systems" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, vol. VOL. 1 OF 5, 28 April 2002 (2002-04-28), pages 460-464, XP010589537 ISBN: 0-7803-7400-2**

- **DANGL M A ET AL: "Multiuser detection in DS-CDMA systems based on a lattice code decoder" SPREAD SPECTRUM TECHNIQUES AND APPLICATIONS, 2002 IEEE SEVENTH INTERNATIONAL SYMPOSIUM ON SEPT. 2-5, 2002, PISCATAWAY, NJ, USA,IEEE, vol. 2, 2 September 2002 (2002-09-02), pages 500-505, XP010615519 ISBN: 0-7803-7627-7**

- **DAMEN M O ET AL: "Further results on the sphere decoder" PROCEEDINGS OF THE 2001 IEEE INTERNATIONAL SYMPOSIUM ON INFORMATION THEORY. ISIT 2001. WASHINGTON, WA, JUNE 24 - JUNE 29, 2001, IEEE INTERNATIONAL SYMPOSIUM ON INFORMATION THEORY, NEW YORK, NY : IEEE, US, 24 June 2001 (2001-06-24), pages 333-333, XP010552939 ISBN: 0-7803-7123-2**

- **EMANUELE VITERBO ET AL: "A Universal Lattice Code Decoder for Fading Channels" IEEE TRANSACTIONS ON INFORMATION THEORY, IEEE SERVICE CENTER, PISCATAWAY, NJ, US, vol. 45, no. 5, July 1999 (1999-07), XP011027410 ISSN: 0018-9448**

- **XIANGYANG ZHUANG ET AL: "Coding-assisted mimo joint detection and decoding in turbo-coded ofdm" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 23-27, XP010608509 ISBN: 0-7803-7467-3**

**Description**

1. Field of the invention.

The present invention relates to the field of digital communication. More specifically, it deals with an efficient way to implement a decoding that is used, for example, in a decoding of a signal transmitted through a noisy channel or multi-user detection.

2. Technological background.

Optimal decoding of digital signals that have been distorted by linear filtering (e.g. a wireless channel) and corrupted by noise is a key and recurrent issue in digital communications. An optimal decoder is the one that finds the candidate digital signal that is the most likely, given the received observed signal. Such optimal decoder is said to be optimal in the sense of Maximum Likelihood (or ML).

A basic approach to perform ML decoding consists in exhaustively enumerating all possible transmitted digital signals and selecting the most likely candidate. The selection criterion often consists in computing a Euclidean distance between the filtered candidate and the received observation. However, such exhaustive enumeration is very time consuming and most of the time impractical for real time applications. Indeed the number of candidates, and hence the decoder complexity, is exponential with respect to the length of the digital signal. For instance a signal carrying 10 bits may take 1024 (or $2^{10}$) different values and all these values need being enumerated in basic ML decoding.

More appropriate ML decoding algorithms have emerged based on a multidimensional lattice description of the problem, which will be referred to as lattice decoders in the sequel. For instance a signal made of 8 consecutive 16QAM symbols can be described by a 8 dimension lattice with 16 discrete possible values per dimension. After linear filtering, the lattice will remain a lattice but it will be distorted. Instead of enumerating all possible lattice points ($16^8$ in the present case), lattice decoders will restrict to evaluating lattice points that are in the vicinity of the received signal.

Such an algorithm is described in document "A universal lattice code decoder for fading channel," written by E. Viterbo and J. Boutros (and published in IEEE Trans. Inform. Theory, vol. 45, pp. 1639-1642, July 1999) or in document "Lattice basis reduction: Improved practical algorithms and solving subset sum problems," written by C.P. Schnorr and M. Euchner (and published in Math. ProGraming, vol. 66, pp. 181-191, 1994). Those documents disclose ML recursive algorithms that are based on a lattice and enable enumeration of points and selection of points after reception of a signal representative of data. The selection of points is done in a sphere the diameter of which depends on the signal/noise ratio. After computation of some metric, a ML point is selected in the sphere.

EP 1 521 414 A published on April 6, 2005 discloses techniques for decoding signals by means of sphere decoding.

Document entitled "A new reduced-complexity sphere decoder for multiple antenna systems" written by Albert M. Chan, published on April 28, 2002 in IEEE international conference on communications, New York, vol. 1 of 5, discloses a sphere decoding algorithm which is less computationally complex than original sphere decoder.

The main drawback of the state of the art is that lattice decoders are still complex (especially for real time applications) even if they have polynomial decoding complexity (instead of exponential for basic ML).

**3. Invention summary.**

The invention is aimed at alleviating these drawbacks of the prior art.

More particularly, the objective of the invention is to simplify the implementation of a decoding method while keeping good performance.

For this purpose, the invention proposes a method of decoding of a multidimensional received signal. More specifically, the method of decoding comprises the following steps:

-    determination of a minimum distance according to a noise level associated to the multidimensional received signal;
-    for at least a part of candidate discrete multidimensional signals, selection of a subset according to the minimum distance with respect to the received multidimensional received signal; and
-    determination of a decoded point in the subset.

According to a specific feature, the determination of a minimum distance comprises a determination of an information representative of the variance of an additive noise associated to the multidimensional received signal.

Advantageously, the selection of a subset comprises a selection of at least a candidate discrete multidimensional signal that is at a distance with respect to the received multidimensional received signal, this distance being larger than the minimum distance.

According to another specific feature, the selection of a subset comprises a selection of at least a candidate discrete multidimensional signal that is at a distance with respect to the received multidimensional received signal, this distance being smaller than a maximum distance.

According to an advantageous feature, the multidimensional received signal is associated to a discrete multidimensional signal that has been space time encoded and transmitted with at least two antennas.

According to a specific feature, the multidimensional received signal is associated to a discrete multidimensional signal corresponding to the collection of signals transmitted by several transmitters.

Advantageously, the determination of a decoded point in the subset comprises a maximum likelihood decoding.

According to a specific feature, the multidimensional received signal comprises data representative of a digital video broadcast signal.

The invention concerns also a receiver comprising a decoder of a multidimensional received signal, characterized in that the decoder comprises the following means:

- means of determination of a minimum distance according to a noise level associated to the multidimensional received signal;
- for at least a part of candidate discrete multidimensional signals, means of selection of a subset according to the minimum distance with respect to the received multidimensional received signal; and
- means of determination of a decoded point in the subset.

This device is for example a receiver, a corresponding chip, a terminal (such as a mobile device, a telecommunication device).

4. Brief description of the drawings.

The invention will be better understood, and other features and advantages will become apparent from reading the description that follows, the description referring to the appended drawings in which:

- Figure 1 represents a wireless network;
- Figure 2 represents an exemplary architecture of a data transmitter capable of sending data in a way compliant with the invention;
- Figure 3 represents an exemplary architecture of a data receiver according to a specific embodiment of the invention;
- Figure 4 represents an exemplary architecture of a decoder inside the receiver of figure 3;
- Figure 5 represents a decoding method implemented in the receiver of figure 3 according to the invention;
- Figure 7 is a schematic view in a case the dimension of the decoding method of Figure 5 is two;
- Figure 8 represents the distribution of the norm of the noise vector affecting the signal received by the receiver of figure 3;

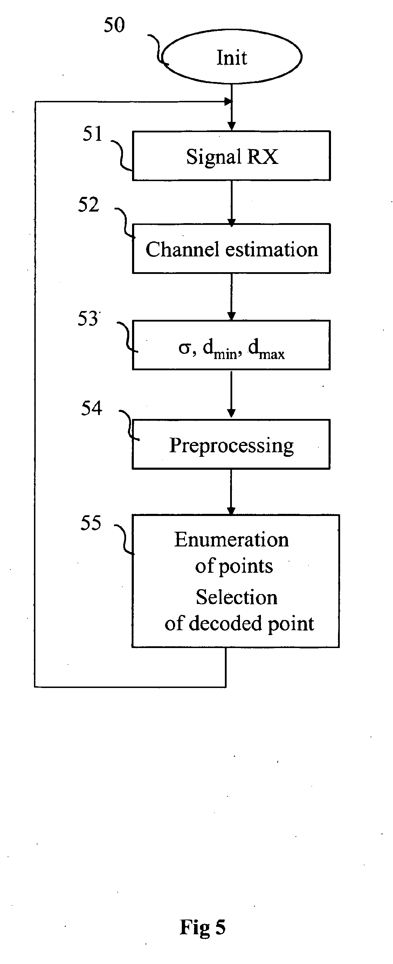

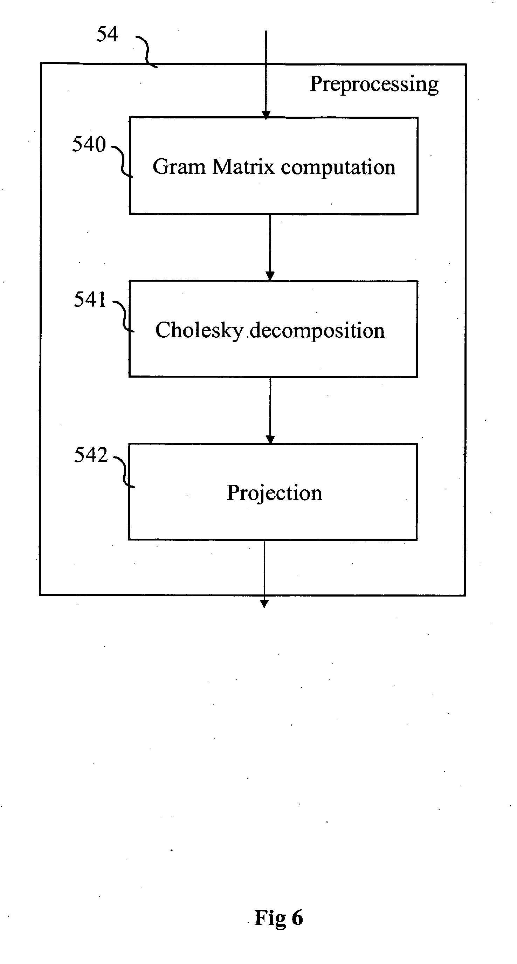

- Figures 6; 9 and 10 represent detailed step of the decoding method of Figure 5; and

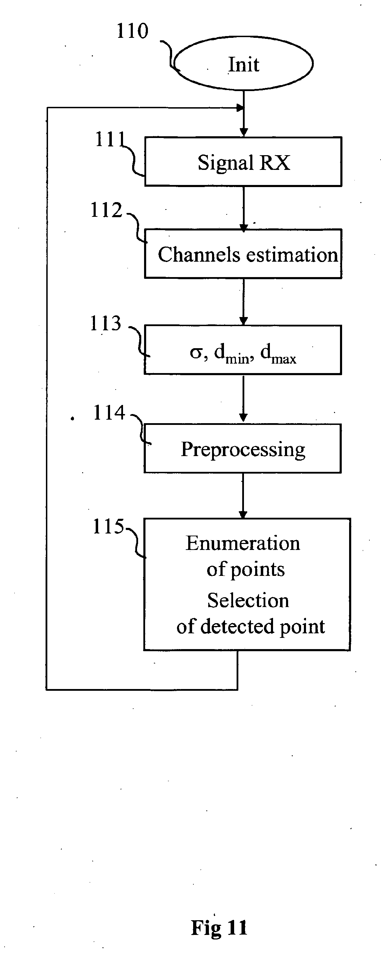

- Figure 11 represents a multi-user detection according to a specific embodiment of the invention.

5. Detailed description of the invention.

The invention reduces the complexity of lattice based decoders, especially when the number of dimensions becomes large (for example, when their number is larger than 8). The invention can be applied to many systems that are based on ML decoding, especially to decoding of data transmitted through a MIMO channel or to multi-user detection.

When applied to ML decoding of STBC encoded MIMO transmissions with large number of antennas (for example with at least four transmitting antennas), this allows reducing the lattice decoding complexity. As a consequence, this enables implementing high throughput high reliability wireless MIMO transmissions with reasonable receiver complexity.

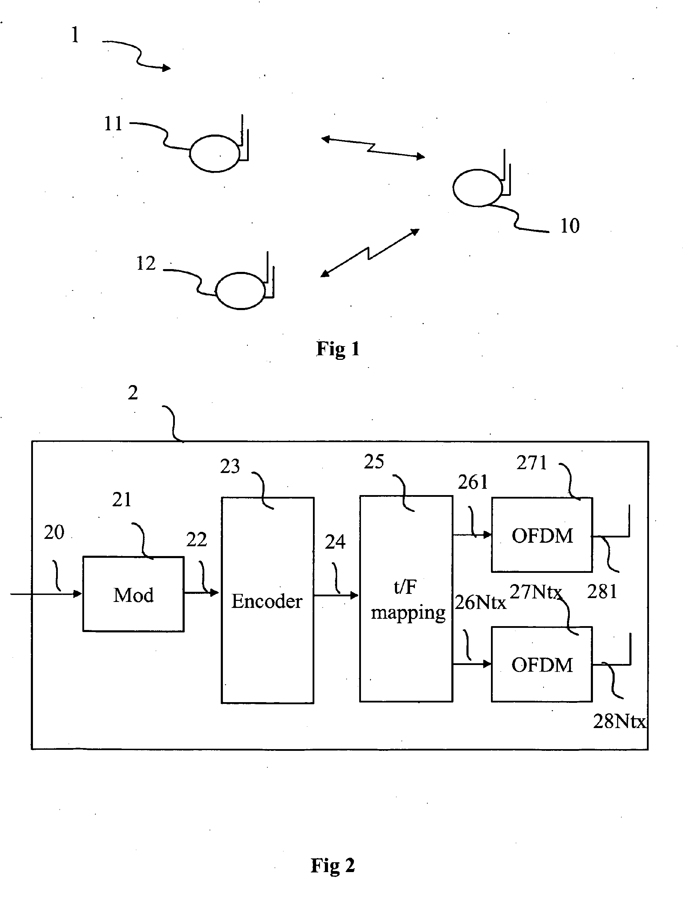

Figure 1 represents a wireless network 1 comprising several stations 10 to 12. Each station 10 to 12 comprises a transmitter and a receiver using a MIMO (or Multiple Input Multiple Output) antenna system. Station 10 communicates with stations 11 and 12 through a wireless link.

Figure 2 represents an exemplary architecture of a data transmitter 2 capable of sending data in a way compliant with the invention applied to decoding of a signal transmitted through a MIMO noisy channel. The data transmitter 2 can be implemented in stations 10 to 12.

The transmitter 2 comprises:

- a modulator 21;
- an encoder 23;

- a time/frequency mapper 25;
- *Ntx* OFDM modulators 271 to 27*Ntx* each modulating with an OFDM modulator an input signal 261 to 26*Ntx*; and
- *Ntx* antennas 281 to 28*Ntx*, each being associated to an OFDM modulator respectively 271 to 27*Ntx*.

The transmitter 2 receives a binary signal 22 which is digitally modulated by the modulator 21 with a first modulation which is, for instance a QAM modulation (or "Quadrature Amplitude Modulation") (e.g. 16 QAM or 64QAM). The modulator 21 generates groups of $Q$ complex QAM symbols $S1$ to $SQ$. $Q$ is for example equal to 8.

Each group of $Q$ symbols 22 is then encoded with the encoder 23 to form a STBC (or Space Time Block Code) codeword 24. The STBC is, for instance, a Golden code such as disclosed in document "The Golden Code: A 2 x 2 Full-Rate Space-Time Code with Non-Vanishing Determinants," which has been written by J.-C. Belfiore, G. Rekaya, E. Viterbo (and published in IEEE Transactions on Information Theory, vol. 51, n. 4, pp. 1432-1436, Apr. 2005.). According to a variant, the STBC is as disclosed in "Space-Time block codes from orthogonal designs" document written by V.Tarokh, H. Jafarkhani, and R. A. Calderbank (and published in IEEE Transactions on Information Theory, vol. 45, pp. 1456-1467, July 1999). The STBC is based on a complex matrix of dimension $N_{tx}*N$ where $N$ is the time dimension of the STBC.

The generated STBC 24 is mapped in the time/frequency mapper that transmits a dedicated signal 261 to 26Ntx to each of OFDM modulator 271 to 27Ntx. Then, each modulator 271 to 27Ntx modulates its input signal into an OFDM modulated signal that is sent on an antenna respectively 281 to 28Ntx (after possibly filtering, frequency transposition and amplification as usually done in a radio transmitted signal). As summary, the STBC codeword 24 is then sent on a MIMO channel.

Such a transmitter system is disclosed in "Space-frequency coded broadband OFDM systems", written by H. Bölcskei and A. J. Paulraj (and published in Proc. Wireless Commun. Networking Conf., Chicago, IL, Sept. 23-28, 2000, pp. 1-6).

There are many possible variants of the transmitter that are compliant with the invention. Among them, a single carrier modulation can replace the OFDM modulation (or any multi carrier modulation such IOTA (for "Isotropic Orthogonal Transform Algorithm")). Then, a time/frequency mapper 25 and the OFDM modulators 271 to 27Ntx are replaced by at least two single carrier modulators associated each with a antenna. Such a transmitter system is disclosed in "Space-Time block coding: A simple transmitter diversity technique for wireless communications" written by S. Alamouti (and published in IEEE Journal On Select Areas In Communications, vol. 16, pp. 1451-1458, October 1998).

According to other variants (that are compliant with previous ones), the first modulation can be of any digital modulation, e.g. nPSK (for "Phase Shift Keying with n phase values) or nQAM (eg with n equals to 16, 32, 64, 256...).

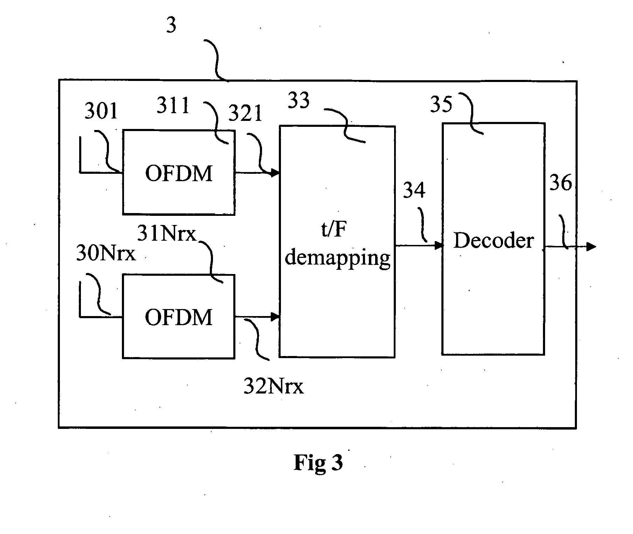

Figure 3 represents an exemplary architecture of a data receiver 3 according to a specific embodiment of the invention. The receiver 3 receives a signal send by the transmitter 2 through a wireless channel. This channel is noisy and comprise Additive White Gaussian Noise (or AWGN) and possibly other noise such as interferences. The sent signal can also be affected by multipath echos and/or Doppler effect. The data receiver 3 can be implemented in stations 10 to 12.

The receiver 3 comprises:

- *Nrx* antennas 301 to 30Nrx;
- *Nrx* OFDM demodulators 311 to 31 *Nrx* each demodulating a noisy OFDM modulated signal transmitted by an antenna respectively 301 to 30*Nrx*;
- a time/frequency demapper 33; and
- a decoder 35.

The receiver 3 matches the transmitter 2 (especially for modulation and code used by the transmitter). Then, according to variants using single carrier modulation inside the transmitter, the OFDM demodulators are replaced by the corresponding single carrier demodulators.

The receiver 3 comprises *Nrx* receive antennas 301 to 30*Nrx* so that the received signal 301 to 30*Nrx* can be represented by a *Nrx*N* matrix, or equivalently a *(Nrx*N)*1* vector R. *N* is, for instance, equal to 2 and represents the time and/or frequency range occupied by the STBC.

The transmission between the encoder 23 and decoder 35 can be modeled by the following equation:

$$R = \begin{pmatrix} \mathbf{H}_1 & \mathbf{0} & \cdots & \mathbf{0} \\ \mathbf{0} & \mathbf{H}_2 & \ddots & \vdots \\ \vdots & \ddots & \ddots & \mathbf{0} \\ \mathbf{0} & \cdots & \mathbf{0} & \mathbf{H}_N \end{pmatrix} \underbrace{\phantom{xxxx}}_{G} CS + v = GS + v \qquad \text{(equation 1)}$$

Where the different parameters are as follows:

- R is the complex ($Nrx*N$)*1 received vector;
- $H_i$ is the complex $Nrx*Ntx$ channel matrix at time/frequency interval $i$ (frequency corresponds to a carrier of the multicarrier modulation; according to a variant using a single carrier modulation the interval $i$ corresponds to a time interval);
- H=diag($H_1$,..., $H_N$) is the complex block diagonal ($N*Nrx$)*($N*Ntx$) channel matrix at time/frequency intervals 1 to N;
- C is the complex ($Ntx*N$)*Q STBC coding matrix, where $Q$ is the number of input complex symbols per STBC codeword;
- S is the complex $Q$*1 input vector of discrete modulated symbols;
- v is the complex ($N*Nrx$)*1 Additive White Gaussian Noise (or AWGN) vector with autocorrelation matrix $R_v = \sigma^2 I NNrx$, where I$NNrx$ is the identity matrix of size ($N*Nrx$)*($N*Nrx$) and $\sigma^2$ represents the variance of the AWGN.

According to a variant, the space/time coding process takes place with real inputs (instead of complex inputs). Then, the C matrix is a real matrix with a dimension ($2Ntx*N$)*($2Q$).

When the additive noise and interferences corrupting the received signal is not white, a whitening filter is advantageously implemented before the decoder 35. $\sigma^2$ represents the variance of the resulting whitened noise.

The time/frequency demapper 33 received demodulated signal from OFDM demodulators 311 to 31$Nrx$ and is doing the reverse mapping (corresponding to dual operation of mapper 25). It provides a demapped signal to decoder 35.

The decoder 35 is a lattice decoder and is particularly well suited to perform ML decoding of the Space-Time Block encoded signal. This decoder is exploiting the properties of the noise distribution by selecting points in a lattice that are between two spheres around a received point, the decoded point being chosen among selected points. This enables a reduction of the decoder complexity as the number of selected points can be lowered in comparison with a state of art decoder where the selected points are within one sphere around the received point. Actually, according to the invention, it is unlikely that ML decoding would choose points of the lattice that are too close to the received point as decoded points. Then, the decoder does not select these points as potential candidates for decoded points. Reduction of number of selected points enables a dramatic reduction of decoding complexity (the decoding complexity depend of the level of noise and is increasing with the number of selected points).

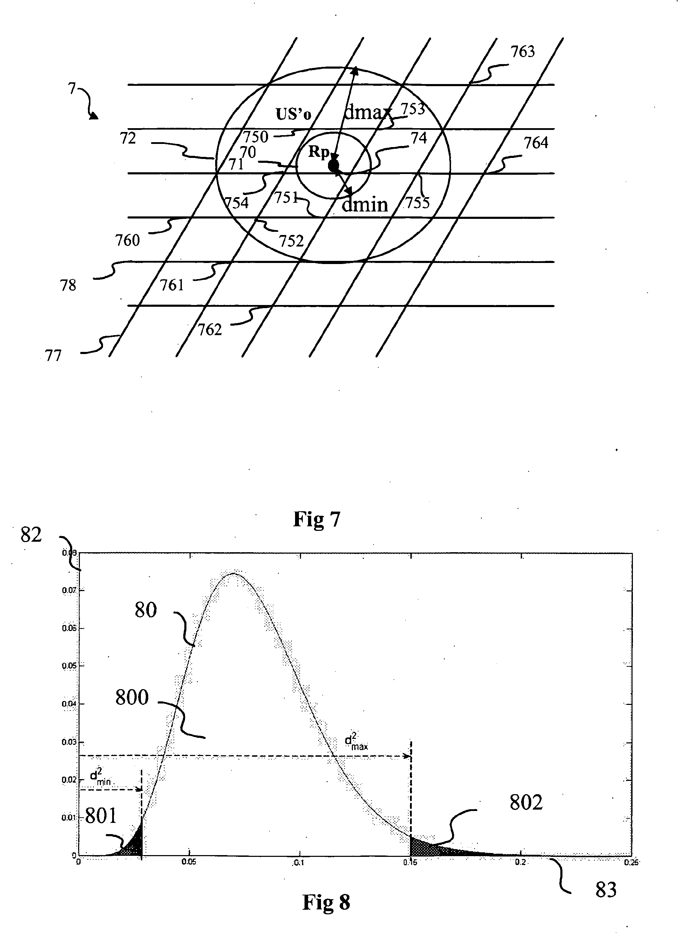

This aspect is illustrated on figure 7, which represents the distribution of received data received by the receiver 3. Figure 7 gives a simplified lattice representation 7 of the decoding problem. The problem is illustrated in the case where the dimension $K$ is 2 ($Q$ equals 1) for the sake of illustration clarity. Those two dimensions are represented respectively by lines 77 and lines 78. Intersections of lines 77 and 78 corresponds to points of the lattice 7.

The transmitted signal (which is the ML point here), is a lattice point 750 represented by US'$_0$. The received signal 70 is represented by $R_p$=US'$_{0+\eta}$ ($\eta$ being the noise vector) and is not a lattice point. The lattice points that can be considered as candidates for ML decoding are, according to the invention, in a search space between two spheres 71 and 72:

- the sphere 71 S($R_p$,dmin) of radius $dmin$ (which has a non null value) and centered on $R_p$;
- the sphere 72 S($R_p$,$dmax$) of radius $dmax$ (which is greater than $dmin$) and centered on $R_p$.

Then, as illustrative example, a lattice point 74 is within the sphere 71 and is not among candidate points for the ML decoding according to the invention (whereas this point would have been selected by a state of the art decoding method). Lattice points 760 to 764 are outside the sphere 72 and are not among candidate points for the ML decoding. Lattice points 750 to 754 are in sphere 72 and outside sphere 71; then, these points are considered as candidates by the decoder.

Figure 8 illustrates a distribution 80 of the norm of the noise vector $\eta$ for $\sigma^2$ equal to 0.01 (20dB SNR) and K (or 2Q) equal to 16. This is a chi square distribution with $K$=16 degrees of freedom denoted $\chi_K^2$. The horizontal axis 83 represents the normalized distance to the received point. The vertical axis 82 corresponds to the distribution of samples for a given normalized distance.

The distances $dmin$ and $dmax$ are defined such that $Pr(\|\eta\|>dmax)$ equals $10^{-2}$ and $Pr(\|\eta\| < dmin)$ equals $10^{-2}$. These probabilities are example values. It can be noted that area 801 corresponding to normalized distance lower than $dmin$ and area 802 corresponding to normalized distance higher than $dmax$ are very small (each having a normalized surface of $10^{-2}$) compared to the middle area 800, where the normalized distance is greater than $dmin$ and lower than $dmax$. On the given example, $dmin$ is around 0.025 that is significant. Then, it shows that it is very unlikely that the distance between a point corresponding to the coded point (without noise) and the actual received point is below $dmin$.

In the decoding process, $dmax$ gives an initial value for the radius of the sphere $S(R_p,r)$ within which the search will take place. By definition of $dmax$, the probability that the transmitted signal is outside this sphere is $10^{-2}$. Setting the initial radius to $dmax$ therefore allows reducing the initial search space, and hence the decoding complexity, for a given level of performance.

According to the invention, $dmin$ is introduced and can advantageously be used in the decoding process according to two ways, as follows:

- A way to use it is to interrupt the decoding as soon as a lattice point is found within $dmin$ from the received signal. It is then very likely that this point is the transmitted point (with a probability of 99%);
- Another way to use it is to define a second sphere $S(R_p,dmin)$ inside $S(R_p,dmax)$, inside which it is useless searching for lattice points.

Any of these utilizations (or a combination of both) will reduce the decoding complexity while knowing the impact on the performance.

More generally, $dmin$ is advantageously defined by the following equation

$$\frac{2}{\sigma^2 2^Q (Q-1)!} \int_0^{d_{min}^2} \left(\frac{2x}{\sigma^2}\right)^{Q-1} \exp\left(\frac{-x}{\sigma^2}\right) \mathrm{d}x = p_0 \qquad (4)$$

where the integrated function is the probability density function (or pdf) of $\|\eta\|^2$ and $p_0$ is the desired probability threshold of the event (i.e. the transmitted signal is in $S(R_p,dmin)$). Then, $dmin/\sigma$ can be determined according to a predefined value of $po$. It can be computed on the fly ($dmin = \sigma.f(po)$ where $f(po)$ is fixed if $po$ is predefined and can be computed off line during the design phase of the decoder) or determined according to a look-up table defining $dmin$ according to $\sigma$. Advantageously, a single value of $po$ is used. According to variants, several values of po are used in the decoder. Then, several values of $f(po)$ are defined accordingly.

As variant, if a large number of po value are required for the decoding, $dmin$ can be determined by using approximations of above equation (e.g. by using a first or second orders of a Taylor series).

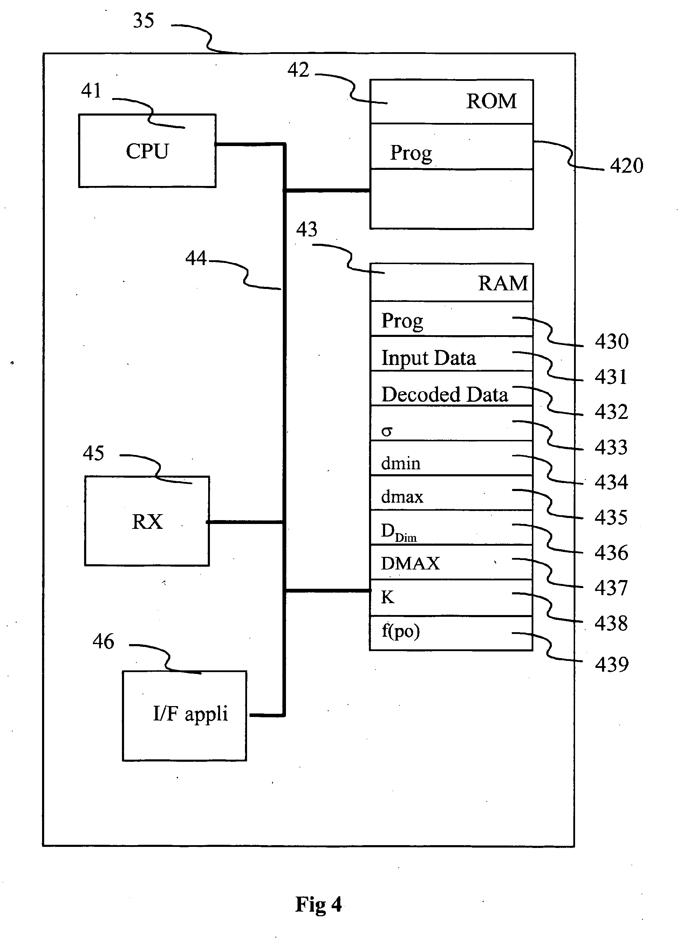

Figure 4 represents an exemplary architecture of the decoder 35 of the receiver 3.

Decoder 35 comprises following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an interface 45 for reception of input signal coming from the demapper 33;
- an interface 46 for transmission of decoded data to an application.

Each of these elements of figure 2 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 42 comprises a program 420.

Algorithm of the method according to the invention are stored in the ROM 42. When switched on, the CPU 41 uploads the program 420 in the RAM and executes the corresponding instructions.

RAM 43 comprises:

- in a register 430, the program executed by the CPU 41 and uploaded after switch on of the decoder 35;
- input data in a register 431;
- decoded data in a register 432;
- a value of σ (standard deviation of noise) in a register 433;
- values of *dmin* and *dmax* in registers respectively 434 and 435;
- parameter D in a register 436;
- parameter *DMAX* in a register 437;
- parameter Kin a register 438; and
- f(*p*o) enabling the computation of *dmin* according to σ in a register 439.

According to a variant of the invention, the decoder 35 is implemented in pure hardware configuration (e.g. in one or several FPGA, ASIC or VLSI with corresponding memory) or in a configuration using both VLSI and DSP.

Figure 5 represents a decoding method implemented in the decoder 35.

The decoding begins with an initialization step 50, wherein different parameters of the method are set to their initial value(s).

Then, during a step 51, the decoder 35 waits for and receives a signal from demapper 33.

Then, the CPU 41 makes a channel estimation 52 based upon the received signal (associated to one transmitted block) or part of it. According to a variant of the invention, the estimation 52 is based upon several received signals (or part of them), each being associated to a transmitted block. According to another variant of the invention, the estimation 52 is not done at each reception of signal corresponding to one transmitted block; in this case, it may be done when necessary according to the channel changes (e.g. every 1 ms).

Then, in a step 53, CPU 41 computes σ using, for example, a pilot sequence and determines *dmin* as explained above and possibly *dmax* in a similar way. Advantageously, step 53 is executed after each channel estimation 52. According to a variant of the invention, step 53 is not done at each reception of signal corresponding to one transmitted block.

Then, CPU 41 is executing a preprocessing step 54.

Finally, CPU 41 is enumerating lattice points and selects decoded point in a step 55. After step 55, step 51 is reiterated.

In a variant using DSP and VLSI, advantageously, step 54 is performed by the DSP and step 55 by a VLSI (e.g. ASIC or FPGA).

Figure 6 details preprocessing step 54. A brief explanation of the decoding method is first disclosed hereafter.

We assume that the decoder 35 perfectly knows the channel matrix diag($H_1$,..., $H_N$), which is implemented in practice by using appropriate pilot symbols and appropriate tracking. The denomination STBC comes from the fact that each STB codeword is represented by a matrix CS and the encoding process is a simple matrix multiplication.

CS in equation (1) denotes the STB (Space Time Block) encoded signal. The encoding process is represented by complex matrix multiplications in the present case but from a more general point of view, it shall be represented by real matrices where the real and imaginary parts of S are encoded separately. Indeed, the STBC scheme disclosed in Alamouti document ("Space-Time block coding: A simple transmitter diversity technique for wireless communications") can only be represented with such real notations. Such more general writing turns (1) into:

$$\underbrace{\begin{pmatrix} \mathbf{R}^R \\ \mathbf{R}^I \end{pmatrix}}_{\mathbf{R'}} = \underbrace{\begin{pmatrix} \mathbf{H}^R & -\mathbf{H}^I \\ \mathbf{H}^I & \mathbf{H}^R \end{pmatrix}\mathbf{C'}}_{\mathbf{G'}} \underbrace{\begin{pmatrix} \mathbf{S}^R \\ \mathbf{S}^I \end{pmatrix}}_{\mathbf{S'}} + \underbrace{\begin{pmatrix} \mathbf{v}^R \\ \mathbf{v}^I \end{pmatrix}}_{\mathbf{v'}} \tag{2}$$

where C' is the STBC encoding matrix in real notations, $(.)^R$ and $(.)^I$ denote respectively the real and imaginary parts of a complex number or matrix.

In real notations, the dimension of the input signal S', which is the problem dimension, is $K=2Q$. When S is modulated using a QAM modulation, each of the components of S' are PAM modulated, i.e. they take bounded discrete values. Therefore G' is in this case a basis of the $K=2Q$ dimensions lattice representing the problem. However, lattice decoding algorithms more advantageously use a triangular matrix as a lattice basis, so that the starting point of the search algorithm is not (2) but it is given by equation (3):

$$\mathbf{R}_p = \mathbf{U}^{-t}\mathbf{G''}\mathbf{R'} = \mathbf{US'} + \mathbf{\eta}$$

U is a upper triangular *KxK* matrix. $R_p$ is the new *K*x1 observation vector and $\eta$ is the *K*x1 noise vector with auto correlation $\mathbf{R}_\eta = \dfrac{\sigma^2}{2}\mathbf{I}_K$. U is the new lattice basis that is used by lattice decoding algorithms.

According to a variant, the time/frequency dimension *N* is replaced by a time dimension if a single carrier modulation is used.

From the new observation $R_p$ and knowledge of the channel, the STBC decoder finds the best estimate of the transmitted signal S. The lattice decoders use a lattice representation of the problem, where each lattice point is a potential transmitted signal. From this lattice representation, they enumerate a reduced number of candidate signals with respect to what would do a basic ML decoder. For instance, with *Q* equals to 8 and using 16QAM constellation, a basic ML decoder will enumerate $16^8$ candidates to decode a STBC codeword and the lattice decoders will only enumerate very few of them. According to ML decoding, The ML signal (or SML) corresponds to the minimum metric on all possible signals, i.e.

$$\mathbf{S}_{ML} = \arg\min_{all\ possible\ \mathbf{S}} \left( \left\| \mathbf{R} - \mathbf{GS} \right\|^2 \right)$$

As all possible signals are too many, the search space is reduced to the space between two spheres 71 and 72 of radius *dmin* and *dmax*.

For any type of lattice decoder, the decoding algorithm can be split into two main phases:

- the preprocessing phase 54 that enables the determination of a base of point lattice on a subset of time intervals and/or subcarriers (frequencies).
- the search phase corresponding to step 55.

The preprocessing phase 54 begins with a computation 540 of Gram Matrix. Gram matrix corresponds to a multiplication of an equivalent channel matrix G' by its transpose $G'^t$ (combination of channel estimation in baseband and of space/time code). Such a preprocessing phase is disclosed in "A universal lattice code decoder for fading channel," written by E. Viterbo and J. Boutros (and published in IEEE Trans. Inform. Theory, vol. 45, pp. 1639-1642, July 1999)

Then, during a step 541, the CPU 41 executes a triangular decomposition. A Cholesky decomposition of the associated Gram matrix is done by the CPU 41. This operation provides a triangular matrix U corresponding to the Gram matrix. More precisely, thanks to the structure of G', a triangular matrix U is defined as follows (where $X^t$ denotes the transpose of a matrix X):

$$G'^t G' = U^t U$$

Then, in a step 542, the received signal is projected on the matrix computed on step 541. This projection first multiplies the received signal R' by $G'^t$ and then by the inverse of $U^t$.

As the variant, the steps 540 and 541 are replaced by a QR decomposition of the equivalent channel matrix (G'), G' being equal to QU where Q is an orthogonal matrix and U an upper triangular matrix. In this case, step 542 comprises a multiplication by $Q^t$.

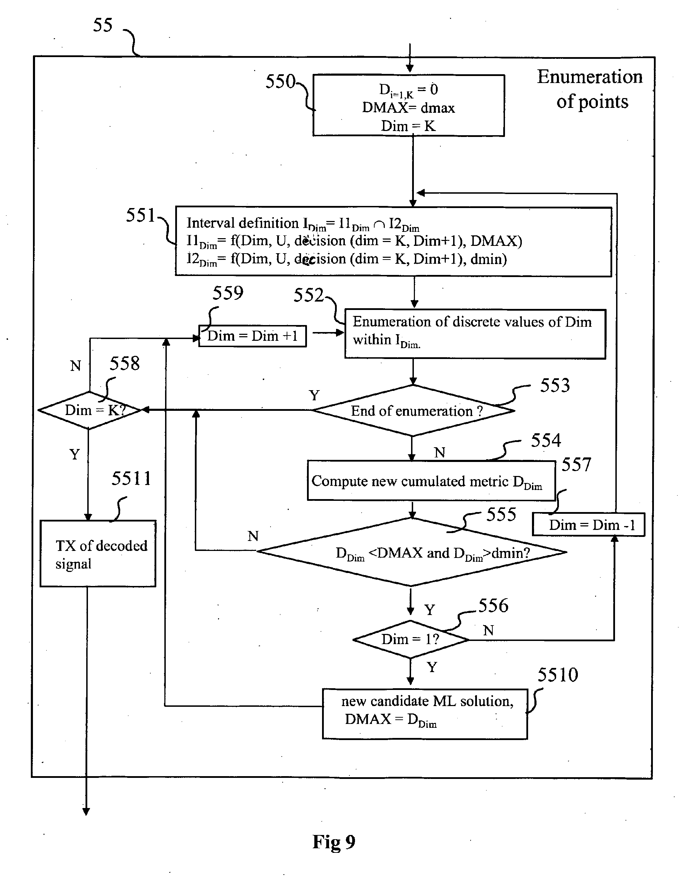

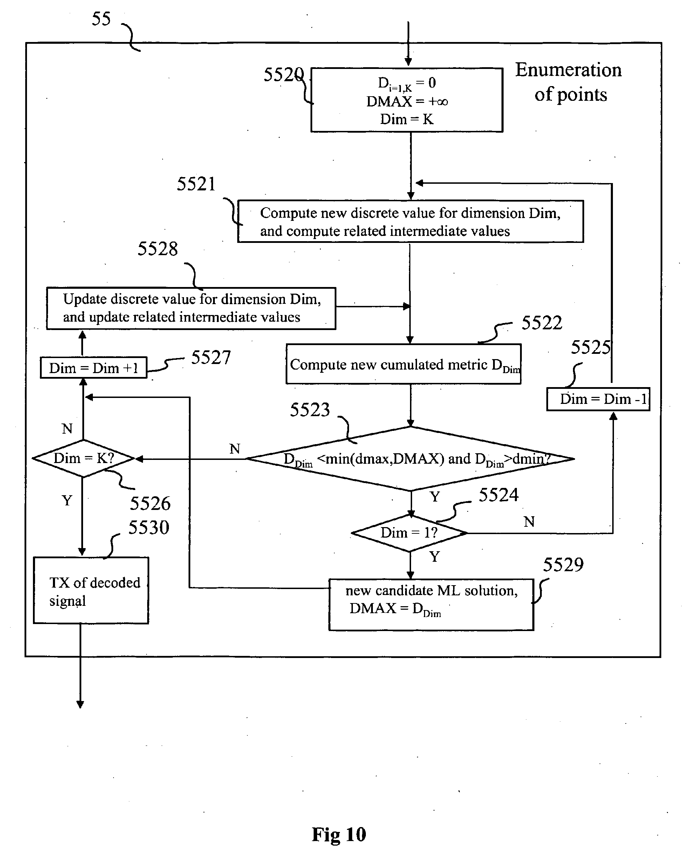

Figure 9 and 10 detail decoding step 55, which comprises an enumeration of candidate lattice points.

ML points are searched among lattice points (using the basis U) that are in a space between spheres 71 and 72 of radius respectively *dmin* and *dmax*.

Depending on the type of lattice decoder, this search phase is implemented in different ways. Figures 9 and 10 detail two different embodiments. Other alternative search algorithms can be implemented according to the invention, these algorithm being based on algorithms such as so called tree search, branch and bound and wherein the ML points are searched in a space outside a sphere of a minimum radius *dmin*.

Embodiment of figure 9 is based upon a sphere decoding (as the algorithm of Viterbo/Boutros) with a restriction of the selection lattice points that must not be too close to the received signal point (the distance between the selected points and the received signal point is greater than *dmin*). Provided that the sphere radius is large enough, the ML point is in the largest sphere. This approach allows to define bounds for each component (or dimension) of the candidate signals S, within which discrete components of the signal are enumerated. That can be summarized by the equation:

$$d\min{}^2 < \left(\mathbf{U}^{-1}\mathbf{R}_p - \mathbf{S}\right)^t \mathbf{U}^t \mathbf{U}\left(\mathbf{U}^{-1}\mathbf{R}_p - \mathbf{S}\right) < d\max{}^2$$

The inverse of U is straightforward. Using that U is upper triangular, we obtain recursive bounds for each component of a candidate S.

The components of S further satisfy the modulation constellation boundaries constraints as S components are a constellation point. For instance, if a 16QAM modulation is used, the components of S satisfy -3<Si<3.

The step 55 begins with an initialization step 550 where a cumulated metric *DDim* associated to each dimension is set to 0, a maximum distance *DMAX* is set to infinity and a current dimension index *Dim* is set to *K* (lattice dimension).

Then, during a step 551, three intervals are defined:

- *I1dim*=[*V1,V2*] defines boundaries for the components of dimension *Dim* of a candidate signal as follows:

$$V1 = \frac{1}{\mathbf{U}_{i,i}}\left(-\sqrt{\left[\left(r^2 - \sum_{j=i+1}^{K}\left(\mathbf{U}_{j,j:K}(\mathbf{O}-\mathbf{S})_{j:K,1}\right)^2\right)^+\right]} + \left(\mathbf{U}_{i,i}\mathbf{O}_{i,1} + \left(\mathbf{U}_{i,i+1:K}(\mathbf{O}-\mathbf{S})_{i+1:K,1}\right)\right)\right)$$

$$V2 = \frac{1}{\mathbf{U}_{i,i}}\left(\sqrt{\left[\left(r^2 - \sum_{j=i+1}^{K}\left(\mathbf{U}_{j,j:K}(\mathbf{O}-\mathbf{S})_{j:K,1}\right)^2\right)^+\right]} + \left(\mathbf{U}_{i,i}\mathbf{O}_{i,1} + \left(\mathbf{U}_{i,i+1:K}(\mathbf{O}-\mathbf{S})_{i+1:K,1}\right)\right)\right)$$

for *i = K*-1 and with *r= DMAX*, **O**=**U**$^{-1}$**R**$_p$ and *i = Dim*
- *I2dim* =]-∞, *V'1*] U [*V'2*, +∞[ defines boundaries for the components of dimension *Dim* of a candidate signal as follows:

$$V'1 = \frac{1}{\mathbf{U}_{i,i}}\left(-\sqrt{\left[\left(r^2 - \sum_{j=i+1}^{K}\left(\mathbf{U}_{j,j:K}(\mathbf{O}-\mathbf{S})_{j:K,1}\right)^2\right)^+\right]} + \left(\mathbf{U}_{i,i}\mathbf{O}_{i,1} + \left(\mathbf{U}_{i,i+1:K}(\mathbf{O}-\mathbf{S})_{i+1:K,1}\right)\right)\right)$$

$$V'2 = \frac{1}{\mathbf{U}_{i,i}}\left(\sqrt{\left[\left(r^2 - \sum_{j=i+1}^{K}\left(\mathbf{U}_{j,j:K}(\mathbf{O}-\mathbf{S})_{j:K,1}\right)^2\right)^+\right]} + \left(\mathbf{U}_{i,i}\mathbf{O}_{i,1} + \left(\mathbf{U}_{i,i+1:K}(\mathbf{O}-\mathbf{S})_{i+1:K,1}\right)\right)\right)$$

for i = K -1 and with r = *dmin*, **O** = **U**$^{-1}$**R**$_p$ and *i = Dim*
- *IDim* is equal to the intersection of *I1dim* and *I2dim* and is also restricted to the boundaries of the modulation constellation.

Then, during a step 552, the CPU 41 begins to enumerate or continues to enumerate the discrete values of a component of dimension *Dim* of a candidate.

Then, during a test 553, the CPU 41 checks if the enumeration is finished (i.e. if all possible discrete values of *Idim* have been tested).

If the negative, during a step 554, the CPU 41 computes a new cumulated metric *DDim* associated to *Dim* and current related discrete value.

Then, during a test 555, the CPU 41 checks if the cumulated metric *DDim* is smaller than *DMAX* and larger than *dmin.*

If so, during a test 556, the CPU 41 checks if the current dimension *Dim* is equal to 1.

If no, the dimension *Dmin* is decreased by 1 in a step 557 and the step 551 is reiterated.

If during the test 553, the end of enumeration is reached, or if the result of test 555 is negative, then, during a test 558, the CPU 41 checks if *Dim* equals K.

If *Dim* is different of K, then during a step 559, *Dim* is increased by 1 and step 552 is reiterated.

If *Dim* equals K, then, during a step 5511, the current ML candidate is chosen and sent as decoded signal and demapped according to digital modulation (symbol to bits conversion) to an application.

If the result of test 556 is positive (*Dim*=1), then during a step 5510, a new candidate ML solution replaces the current one and *DMAX* is set to *DDim*. After step 5510, step 559 is performed.

Embodiment of figure 10 is based upon a decoding based on projections (as the Schnorr-Euchner algorithm) with a restriction of the selection lattice points that must not be too close to the received signal point (the distance between the selected points and the received signal point is greater than *dmin*). The search comprises successive orthogonal projections of the received signal on lattice subspaces and enumerating the lattice points between two spheres 71 and 72 around the projected point.

The components of S further satisfy the modulation constellation boundaries constraints as S components are a constellation point. For instance, if a 16QAM modulation is used, the components of S satisfy $-3 < Si < 3$.

According to variant of figure 10, the step 55 begins with an initialization step 5520 where a cumulated metric *DDim* associated to each dimension is set to 0, a maximum distance *DMAX* is set to infinity and a current dimension index *Dim* is set to K (lattice dimension).

Then, during a step 5521, the CPU 41 computes a new discrete value of component of dimension *Dim* of a candidate signal and intermediate values related to *Dim* and to this discrete value (incrementing step, partial metric).

Then, during a step 5522, the CPU 41 computes a new cumulated metric *DDim* associated to *Dim* and current related discrete value.

Then, during a test 5523, the CPU 41 checks if the cumulated metric *DDim* is smaller than the minimum value among *dmax* and *DMAX* ($DDim < \min(dmax, DMAX)$) and larger than *dmin* ($DDim > dmin$).

If so, during a test 5524, the CPU 41 checks if the current dimension *Dim* is equal to 1.

If no, the dimension *Dim* is decreased by 1 in a step 5525 and the step 5521 is reiterated.

If yes, during a step 5529, a new candidate ML solution replaces the current one and *DMAX* is set to *DDim*.

If the result of test 5523 is negative, or then, during a test 5526, the CPU 41 checks if *Dim* equals K.

If *Dim* is different of K or after step 5529, during a step 5527, *Dim* is increased by 1.

Then, during a step 5528, the CPU 41 updates a new discrete value of component of dimension *Dim* of a candidate signal (i.e. add the incrementing step to the previous discrete value of *Dim)* and intermediate values related to *Dim* and to this discrete value. Then, step 5522 is reiterated.

If *Dim* equals *K* during the test 5526, then, during a step 5530, the current ML candidate is chosen and sent as decoded signal and demapped according to digital modulation (symbol to bits conversion) to an application.

Figure 11 represents a multiuser detection according to a specific embodiment of the invention. This detection or decoding is applied to a wireless network comprising a receiver and a set of several transmitters that can be identified through a multiple access scheme (e.g. CDMA (or Code Division Multiple Access), flash OFDM, ...). In this context, several users are sharing the same propagation resource to transmit data to the receiver.

In the case of multiuser detection, similarly to the MIMO decoding as disclosed previously, the decoding problem comprises a detection of a transmitted multidimensional discrete input vector based on a multidimensional continuous observation that is made of a linearly distorted version of the transmitted vector further corrupted by additive noise.

For multiuser detection according to the invention, the multidimensional input vector is made of the real and imaginary components of the collection of symbols transmitted by *Q* users on a given time and/or frequency region depending on the multiple access scheme. For instance, in the case of Code Division Multiple Access (CDMA), the region corresponds to the time duration of the spreading sequences. The multidimensional continuous observation is made of the collection of matched responses to the set of used multiple access signatures. The linear distortion of the transmitted signals is the matrix made of the collection of equivalent channel matrices between the *Q* transmitters and the receiver taking into account the multiple access scheme. For instance, in the case of CDMA, this linear distortion is made of the combination of the channel matrices with the correlation matrix of the spreading codes subset. The additive noise is the thermal additive white Gaussian noise at the receiver side and its amplitude follows a chi square law.

Figure 11 represents a multi-user detection according to a specific embodiment of the invention. This detection is implemented in a receiver that receives data from *Q* transmitters using e.g. a CDMA.

The decoding begins with a initialization step 110, wherein different parameters of the method are set to their initial value(s).

Then, during a step 111, the receiver waits for and receives a signal from filters matched to the used CDMA sequences.

Then, the receiver makes an estimation 112 of the channels between the *Q* transmitters and the receiver. This estimation is based upon the pilot sequences used specifically by each transmitter.

Then, in a step 113, the receiver computes σ using, for example, pilot sequences, and determines *dmin* as explained above (*Q* meaning here the number of transmitters being used to define *dmin* in the same way as *Q* meaning the number of symbol per space/time codeword in the embodiment of figure 5) and possibly *dmax* in a similar way.

Advantageously, step 113 is executed after each channel estimation 112. According to a variant of the invention, step 113 is not done at each reception of signal corresponding to one transmitted block.

Then, the receiver is executing a preprocessing step 114 similar to step 54 of figure 5, the equivalent channel matrix G' being replaced by the matrix made of the collection of equivalent channel matrices between the $Q$ transmitters and the receiver taking into account the multiple access scheme.

Finally, receiver is enumerating lattice points and selects decoded point in a step 115 similarly to step 55 of figure 5, the candidate transmitted space/time encoded signal being replaced by the collection of the transmitted signals by the $Q$ transmitters.

After step 115, step 111 is reiterated.

According to variant of multi-user detection, part of the transmitters or all of them and the receiver use single antennas, or MIMO. According to other variants, the transmitters and the receiver are using single carrier or multiple carrier modulation.

Of course, the invention is not limited to the embodiments described above.

The invention is compatible with any type of wireless link (point to point links, wireless LANs, mobile networks, digital broadcasting, satellite communication, ...). The disclosed receiver in figure 3 comprises then elements adapted to a specific application (such as front end, demodulator, MAC layer interface, and all other usual communication layer elements). The invention is especially well adapted to the reception of Digital Video Broadcasting (or DVB (e.g. DVB-T (terrestrial), DVB-S (satellite), DVB-H (handheld)..). In this case, the discrete multidimensional coded signal comprises data representative of a digital video broadcast signal.

The invention is advantageously used in high spectral efficiency wireless transmission (MIMO system and/or nQAM modulation), and, in particular, high rate transmission. Indeed, the invention can be used for other transmission (eg. single antenna for multi-user detection, nQPSK modulation, ...).

The invention is not limited to MIMO decoding or multi-user detection and can be applied to combination of MIMO decoding and multi-user detection and more generally to any system wherein noise amplitude distribution is following a chi square law and more generally laws that are not centred on 0 (these laws are generally associated to a multidimensional distribution of noise in a multidimensional signal decoding).

The invention comprises the determination of a minimum distance according to a noise level associated to the multidimensional received signal. When applied to a MIMO decoding, the dimensions of the received signals corresponds to K (in real notation for nQAM or nPSK modulation) or $Q$ (in complex notation for nQAM or nPSK modulation or polar notation for nPSK modulation). When applied to a multi-user detection, the dimensions of the received signal corresponds to the number of users ($Q$ in complex notation or polar notation (if the users using nPSK modulation)) or $K=2Q$ in real notation.

According to MIMO decoding according to the invention, the receiver decodes a signal that has been space time encoded and transmitted with at least two antennas. The space time encoding can be based on a space time block code. According to a variant, the space time encoding is a simple spatial multiplexing; then, the code matrix C is the identity matrix.

**Claims**

1. Method of decoding of a multidimensional received signal, **characterized in that** it comprises the following steps:

    - determination (53, 113) of a minimum distance according to a noise level associated to the multidimensional received signal;
    - selection of a subset comprising at least a candidate discrete multidimensional signal (750 to 755) that is at a distance with respect to the multidimensional received signal (70), this distance being larger than the minimum distance; and
    - determination (55, 115) of a decoded point (750) in the subset.

2. Method according to claim 1, **characterized in that** the determination (53, 113) of a minimum distance comprises a determination of an information representative of the variance of an additive noise associated to the multidimensional received signal.

3. Method according to claim 1, **characterized in that** the selection of a subset comprises a selection of at least a candidate discrete multidimensional signal that is at a distance with respect to the multidimensional received signal, this distance being smaller than a maximum distance.

4. Method according to any of claims 1 to 3, **characterized in that** the multidimensional received signal (70) is associated to a discrete multidimensional signal that has been space time encoded and transmitted with at least two antennas.

**5.** Method according to any of claims 1 to 4, **characterized in that** the multidimensional received signal (70) is associated to a discrete multidimensional signal corresponding to the collection of signals transmitted by several transmitters.

**6.** Method according to any of claims 1 to 5, **characterized in that** the determination of a decoded point in the subset comprises a maximum likelihood decoding.

**7.** Method according to any of claims 1 to 6, **characterized in that** the multidimensional received signal comprises data representative of a digital video broadcast signal.

**8.** Device comprising a decoder of a multidimensional received signal, **characterized in that** the decoder comprises the following means:

- means of determination (53, 113) of a minimum distance according to a noise level associated to the multidimensional received signal;
- means of selection of a subset comprising at least a candidate discrete multidimensional signal (750 to 755) that is at a distance with respect to the multidimensional received signal (70), this distance being larger than the minimum distance; and
- means of determination (55, 115) of a decoded point (750) in the subset.

**Patentansprüche**

**1.** Verfahren zum Decodieren eines mehrdimensionalen Empfangssignals, **dadurch gekennzeichnet, dass** das Verfahren die folgenden Schritte umfasst:

- Bestimmung (53, 113) eines Mindestabstands in Übereinstimmung mit einem dem mehrdimensionalen Empfangssignal zugeordneten Rauschpegel;
- Auswahl einer Teilmenge, die mindestens einen Anwärter für ein diskretes mehrdimensionales Signal (750 bis 755) umfasst, der einen Abstand in Bezug auf das mehrdimensionale Empfangssignal (70) hat, wobei dieser Abstand größer als der Mindestabstand ist; und
- Bestimmung (55, 115) eines decodierten Punkts (750) in der Teilmenge.

**2.** Verfahren nach Anspruch 1, **dadurch gekennzeichnet, dass** die Bestimmung (53, 113) eines Mindestabstands eine Bestimmung einer Information umfasst, die repräsentativ für die Streuung eines dem mehrdimensionalen Empfangssignals zugeordneten additiven Rauschens ist.

**3.** Verfahren nach Anspruch 1, **dadurch gekennzeichnet, dass** die Auswahl einer Teilmenge eine Auswahl mindestens eines Anwärters für ein diskretes mehrdimensionales Signal umfasst, der einen Abstand in Bezug auf das mehrdimensionale Empfangssignal hat, wobei dieser Abstand kleiner als ein Maximalabstand ist.

**4.** Verfahren nach einem der Ansprüche 1 bis 3, **dadurch gekennzeichnet, dass** das mehrdimensionale Empfangssignal (70) einem diskreten mehrdimensionalen Signal zugeordnet ist, das raumzeitlich codiert und mit mindestens zwei Antennen gesendet worden ist.

**5.** Verfahren nach einem der Ansprüche 1 bis 4, **dadurch gekennzeichnet, dass** dem mehrdimensionalen Empfangssignal (70) ein diskretes mehrdimensionales Signal zugeordnet ist, das der Zusammenstellung von durch mehrere Sender gesendeten Signalen entspricht.

**6.** Verfahren nach einem der Ansprüche 1 bis 5, **dadurch gekennzeichnet, dass** die Bestimmung eines decodierten Punkts in der Teilmenge eine Maximum-Likelihood-Decodierung umfasst.

**7.** Verfahren nach einem der Ansprüche 1 bis 6, **dadurch gekennzeichnet, dass** das mehrdimensionale Empfangssignal Daten umfasst, die repräsentativ für ein Digitalfernsehsignal sind.

8. Vorrichtung, die einen Decodierer eines mehrdimensionalen Empfangssignals umfasst, **dadurch gekennzeichnet, dass** der Decodierer die folgenden Mittel umfasst:

- ein Mittel zur Bestimmung (53, 113) eines Mindestabstands in Übereinstimmung mit einem dem mehrdimensionalen Empfangssignal zugeordneten Rauschpegel;
- ein Mittel zur Auswahl einer Teilmenge, die mindestens einen Anwärter für ein diskretes mehrdimensionales Signal (750 bis 755) umfasst, der einen Abstand in Bezug auf das mehrdimensionale Empfangssignal (70) hat, wobei dieser Abstand größer als der Mindestabstand ist; und
- ein Mittel zur Bestimmung (55, 115) eines decodierten Punkts (750) in der Teilmenge.

**Revendications**

1. Procédé de décodage d'un signal multidimensionnel reçu, **caractérisé en ce qu'**il comprend les étapes suivantes :

- détermination (53, 113) d'une distance minimale selon un niveau de bruit associé au signal multidimensionnel reçu ;
- sélection d'un sous-ensemble comprenant au moins un signal multidimensionnel discret candidat (750 à 755) qui se situe à une certaine distance par rapport au signal multidimensionnel reçu (70), cette distance étant supérieure à la distance minimale ; et
- détermination (55, 115) d'un point décodé (750) dans le sous-ensemble.

2. Procédé selon la revendication 1, **caractérisé en ce que** la détermination (53, 113) d'une distance minimale comprend une détermination d'une information représentant la variance d'un bruit additif associé au signal multidimensionnel reçu.

3. Procédé selon la revendication 1, **caractérisé en ce que** la sélection d'un sous-ensemble comprend une sélection d'au moins un signal multidimensionnel discret candidat qui se situe à une certaine distance par rapport au signal multidimensionnel reçu, cette distance étant inférieure à une distance maximale.

4. Procédé selon une quelconque des revendications 1 à 3, **caractérisé en ce que** le signal multidimensionnel reçu (70) est associé à un signal multidimensionnel discret qui a été soumis à un codage spatio-temporel et transmis avec au moins deux antennes.

5. Procédé selon une quelconque des revendications 1 à 4, **caractérisé en ce que** le signal multidimensionnel reçu (70) est associé à un signal multidimensionnel discret correspondant à la collecte de signaux transmis par plusieurs émetteurs.

6. Procédé selon une quelconque des revendications 1 à 5, **caractérisé en ce que** la détermination d'un point décodé dans le sous-ensemble comprend un décodage de probabilité maximale.

7. Procédé selon une quelconque des revendications 1 à 6, **caractérisé en ce que** le signal multidimensionnel reçu comprend des données représentant un signal de diffusion vidéo numérique.

8. Dispositif comprenant un décodeur d'un signal multidimensionnel reçu, **caractérisé en ce que** le décodeur comprend les moyens suivants :

- moyen de détermination (53, 113) d'une distance minimale selon un niveau de bruit associé au signal multidimensionnel reçu ;
- moyen de sélection d'un sous-ensemble comprenant au moins un signal multidimensionnel discret candidat (750 à 755) qui se situe à une certaine distance par rapport au signal multidimensionnel reçu (70), cette distance étant supérieure à la distance minimale ; et
- moyen de détermination (55, 115) d'un point décodé (750) dans le sous-ensemble.

1

11

12

10

**Fig 1**

2

20

21

Mod

22

23

Encoder

24

25

t/F mapping

261

26Ntx

271

OFDM

27Ntx

281

OFDM

28Ntx

**Fig 2**

**Fig 3**

**Fig 4**

50 · Init

51 Signal RX

52 Channel estimation

53 $\sigma$, $d_{min}$, $d_{max}$

54 Preprocessing

55 Enumeration
of points

Selection
of decoded point

**Fig 5**

**Fig 6**

**Fig 7**

**Fig 8**

**Fig 9**

**Fig 10**

110 — Init

111 — Signal RX

112 — Channels estimation

113 — $\sigma, d_{min}, d_{max}$

114 — Preprocessing

115 — Enumeration
of points

Selection
of detected point

**Fig 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1521414 A

### Non-patent literature cited in the description

- **E. VITERBO ; J. BOUTROS.** A universal lattice code decoder for fading channel. *IEEE Trans. Inform. Theory,* July 1999, vol. 45, 1639-1642
- *Lattice basis reduction: Improved practical algorithms and solving subset sum problems,* 1994, vol. 66, 181-191
- A new reduced-complexity sphere decoder for multiple antenna systems. *IEEE international conference on communications,* 28 April 2002, vol. 1
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436

- **V.TAROKH ; H. JAFARKHANI ; R. A. CALDERBANK.** Space-Time block codes from orthogonal designs. *IEEE Transactions on Information Theory,* July 1999, vol. 45, 1456-1467
- **H. BÖLCSKEI ; A. J. PAULRAJ.** Space-frequency coded broadband OFDM systems. *Proc. Wireless Commun. Networking Conf,* 23 September 2000, 1-6
- **S. ALAMOUTI.** Space-Time block coding: A simple transmitter diversity technique for wireless communications. *IEEE Journal On Select Areas In Communications,* October 1998, vol. 16, 1451-1458